(19) Europäisches Patentamt
European Patent Office
Office européen des brevets

(11) EP 0 906 320 B1

(12) # FASCICULE DE BREVET EUROPEEN

(45) Date de publication et mention de la délivrance du brevet:
**03.04.2002 Bulletin 2002/14**

(21) Numéro de dépôt: **97928325.6**

(22) Date de dépôt: **11.06.1997**

(51) Int Cl.[7]: **C07F 7/12**, C07F 7/20

(86) Numéro de dépôt international:
**PCT/FR97/01034**

(87) Numéro de publication internationale:
**WO 97/47629 (18.12.1997 Gazette 1997/54)**

(54) **PROCEDE AMELIORE D'OBTENTION D'ORGANOSILANES METTANT EN OEUVRE UNE REACTION DE REDISTRIBUTION**

VERFAHREN ZUR HERSTELLUNG VON ORGANOSILAN DURCH EINE REDISTRIBUTIONSREAKTION

IMPROVED METHOD FOR OBTAINING ORGANOSILANES IMPLEMENTING A REDISTRIBUTION REACTION

(84) Etats contractants désignés:
**AT BE CH DE DK ES FI FR GB GR IE IT LI LU NL PT SE**

(30) Priorité: **12.06.1996 FR 9607569**

(43) Date de publication de la demande:
**07.04.1999 Bulletin 1999/14**

(73) Titulaire: **RHODIA CHIMIE**
**92408 Courbevoie Cédex (FR)**

(72) Inventeurs:
- **CATHALA, Max**
  **F-69680 Chassieu (FR)**
- **COLIN, Pascale**
  **F-69680 Chassieu (FR)**
- **DARDARE, Michel**
  **F-69970 Chaponnay (FR)**
- **IGERSHEIM, Françoise**
  **F-69003 Lyon (FR)**

(74) Mandataire: **Trolliet, Maurice et al**
**RHODIA SERVICES**
**Direction de la Propriété Industrielle**
**CRIT-Carrières - BP 62**
**69192 Saint-Fons Cédex (FR)**

(56) Documents cités:
**FR-A- 2 119 477**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 906 320 B1

## Description

La présente invention a pour objet un procédé amélioré d'obtention d'organosilanes et concerne particulièrement un procédé amélioré d'obtention d'organosilanes dans lequel intervient une réaction dite de redistribution. Plus particulièrement, la présente invention concerne un procédé amélioré d'obtention d'organosilanes dans lequel intervient, une réaction de redistribution entre un organohydrogénosilane chloré et un silane organo-substitué et éventuellement chloré pour aboutir à un produit comprenant un organohydrogénosilane chloré redistribué, que l'on extrait du milieu réactionnel par distillation.

Sans que cela ne soit limitatif, la présente invention vise tout spécialement une réaction de redistribution entre un alkylhydrogénodichlorosilane et un trialkylchlorosilane pour aboutir à un produit comprenant un dialkylhydrogénochlorosilane redistribué. Ce dialkylhydrogénochlorosilane redistribué est un agent de synthèse particulièrement apprécié dans des applications très nombreuses et variées, par exemple de préparation de monomères organosiliciques ou de composés de base plus condensés.

Le dialkylhydrogénochlorosilane est l'un des sous-produits de la synthèse des alkylchlorosilanes, selon un mode opératoire classique et bien connu qui consiste à faire réagir du chlorure d'alkyle avec du silicium, en présence d'un catalyseur au cuivre, pour former des alkylchlorosilanes. Dans cette synthèse, le dialkyldichlorosilane est le principal produit. On obtient aussi, outre le sous-produit dialkylhydrogénochlorosilane susvisé, des composés du type trialkylchlorosilane, alkyltrichlorosilane et alkylhydrogénodichlorosilane.

Compte-tenu de l'intérêt industriel de ces sous-produits dans la chimie des silicones, et notamment du dialkylhydrogénochlorosilane comme le diméthylhydrogénochlorosilane, de nombreuses propositions de mode opératoire d'obtention de ces sous-produits, ont vu le jour. L'une des seules qui ait fait ces preuves en la matière, est celle consistant à faire intervenir une réaction de redistribution entre, par exemple, un alkylhydrogénodichlorosilane et un trialkylchlorosilane ou entre un alkylhydrogénodichlorosilane et un tétraalkylsilane. Cette redistribution conduit aux dialkylhydrogénochlorosilanes visés, que l'on extrait du milieu réactionnel par distillation.

On connaît dans ce contexte de nombreuses réactions de redistribution des organosilanes, coupant et redistribuant les liaisons silicium-alkyle, silicium-chlore, silicium-hydrogène, en présence de divers catalyseurs tels que des acides de Lewis. Le brevet français FR-A-2 119 477 illustre bien cette technique de préparation de dialkylhydrogénochlorosilane par redistribution/distillation. Conformément à l'enseignement de ce brevet, du méthylhydrogénodichlorosilane et du triméthylchlorosilane sont mis à réagir dans un rapport molaire méthylhydrogénodichlorosilane / triméthylchlorosilane de l'ordre de 0,5 et en présence d'un catalyseur formé par $AlCl_3$. Le mélange réactionnel est placé dans un réacteur, sous une pression autogène de l'ordre de 3 à 5 x $10^5$Pa, et maintenu pendant plusieurs heures, à une température de l'ordre de 85 à 170°C. La Demanderesse a reproduit ce mode opératoire de l'art antérieur et elle a observé que le rendement de la distillation, qui est opérée en fin de procédé pour séparer le diméthylhydrogénochlorosilane redistribué du mélange réactionnel, est anormalement bas et culmine à environ 71 %. Il doit être considéré que de tels résultats ne sont pas satisfaisants sur le plan de la rentabilité industrielle.

Dans cet état de connaissances, l'un des objectifs essentiel de la présente invention consiste en la mise au point d'un procédé amélioré d'obtention d'organosilanes dans lequel intervient une réaction de redistribution entre un organohydrogénosilane chloré et un silane organo-substitué et éventuellement chloré pour aboutir à un produit comprenant un organohydrogénosilane chloré redistribué, que l'on extrait du milieu réactionnel par distillation, lequel procédé se devant d'être caractérisé par des rendements de distillation en produit final visé, l'organohydrogénosilane chloré redistribué, nettement supérieurs à ceux des procédés de redistribution/distillation connus.

Un autre objectif essentiel de l'invention est de proposer un procédé du type de celui visé ci-dessus et qui soit particulièrement simple à mettre en oeuvre et économique.

Pour pouvoir atteindre tous ces objectifs, et d'autres encore, la Demanderesse a eu le mérite de mettre en évidence un phénomène parasite induit par le catalyseur, au cours de la distillation. En effet, il a pu être démontré que les catalyseurs classique de redistribution tels que par exemple l'$AlCl_3$, catalysent une réaction de dismutation de l'organohydrogénosilane chloré produit par redistribution. Une telle dismutation entraîne la transformation dudit produit de redistribution en sous-produits du type organohydrogénosilane éventuellement chloré, d'une part, et organosilane chloré, d'autre part. C'est ainsi que, par exemple, $Me_2HSiCl$ est converti en $Me_2SiH_2$ et en $Me_2SiCl_2$, du fait de cette dismutation parasite (l'abréviation Me désigne le radical monovalent $CH_3$).

Il est clair qu'un tel phénomène ne peut qu'être tout à fait préjudiciable au rendement en organohydrogénosilane chloré redistribué, comme par exemple $Me_2HSiCl$.

Le mérite de la Demanderesse ne s'est pas limité à cette mise à jour du problème technique existant dans les réactions connues de redistribution/distillation. En effet, de manière tout à fait surprenante et inattendue, elle a également trouvé un moyen de réduire, voir de supprimer, la dismutation parasite, en mettant en oeuvre une inhibition du catalyseur de redistribution, dès lors qu'il a rempli son rôle dans le premier stade du procédé.

Il s'ensuit que la présente invention concerne un procédé amélioré d'obtention d'organosilanes comprenant :

- une réaction de redistribution entre un organohydrogénosilane chloré de formule (1) $(R)_a$ (H)b $SiCl_{4-a-b}$ et un silane organo-substitué et éventuellement chloré de formule (2) $(R')_cSiCl_{4-c}$, formules dans lesquelles : a = 1 ou 2 ; b = 1 ou 2 ; a + b = 3 ; c = 1, 2, 3 ou 4 ; les symboles R et R' sont semblables ou différents et représentent chacun un radical alkyle linéaire ou ramifié en $C_1$ - $C_6$ ou un radical aryle en $C_6$ - $C_{12}$; ladite réaction de redistribution se déroulant en présence d'une quantité efficace d'un catalyseur consistant dans un acide de Lewis de formule (3) $M(X)_d$ dans laquelle : M représente un métal sélectionné parmi Ti, Fe, Cu, Ag, Zn, Cd, Hg, Al, Ga, In, B, Sn, Pb, Sb et Bi ; X représente un atome d'halogène ; d représente la valence du métal M ;
- et une séparation par distillation de l'organohydrogénosilane chloré produit par redistribution ;

ledit procédé étant caractérisé en ce que l'on fait intervenir, après la redistribution, au moins un composé inhibiteur du catalyseur de redistribution répondant aux définitions suivantes :

- il est choisi parmi les polyorganosiloxanes (en abréviation POS) fluides ayant une viscosité à 25°C au plus égale à 5 000 mPa.s ;
- il est utilisé dans des proportions telles que le rapport

$$r = \frac{\text{nombre de moles d'atome de métal M apportées par le catalyseur}}{\text{nombre de moles d'atome d'oxygène apportées par l'inhibiteur}}$$

est égal ou inférieur à 0,9.

Conformément à la présente invention, on tire avantage de l'inhibition du catalyseur de redistribution, dès lors que ce dernier a rempli sa fonction. Cette neutralisation de l'activité catalytique permet de réduire au maximum, voir de supprimer, les réactions parasites de dismutation, qui intervenaient traditionnellement lors de la distillation. Ainsi, les organohydrogénosilanes chlorés redistribués visés sont produits, en fin de distillation, avec de meilleurs rendements qu'auparavant.

Un autre effet très avantageux est observable quand le composé inhibiteur est utilisé, et il s'agit là d'une modalité préférée de mise en oeuvre de la présente invention, dans des proportions telles que le rapport r mentionné ci-avant est situé très précisément dans l'intervalle allant de 0,6 à 0,9.

Cet autre effet très avantageux consiste dans l'élimination de l'apparition et du dépôt de matériaux solides dans les culots de distillation qui présentent alors un aspect homogène. Dans le cas de l'absence de composé inhibiteur ou dans le cas de l'emploi de proportions insuffisantes de composé inhibiteur (correspondant à des valeurs de r supérieures à 0,9) ou dans le cas de l'emploi de proportions trop importantes de composé inhibiteur (correspondant à des valeurs de r inférieures à 0,6), on est conduit à des culots de distillation qui présentent alors un aspect biphasique du fait de l'apparition et du dépôt de matériaux solides. La Demanderesse pense que ces matériaux solides peuvent être : des particules de catalyseur dans le cas de l'emploi de proportions insuffisantes de composé inhibiteur ; des cristaux amorphes d'un complexe formé à partir du catalyseur et du composé silicone inhibiteur dans le cas de l'emploi de proportions trop importantes de composé inhibiteur.

Le composé silicone inhibiteur peut être :

(i) un POS linéaire ou sensiblement linéaire et constitué de motifs de formule (4), terminé à l'une des extrémités des chaînes par un motif de formule (5) et à l'autre extrémité par un motif de formule (6),
(2i) un POS cyclique et constitué par des motifs de formule (4),
(3i) un mélange de plusieurs espèces (i) ou (2i) entre elles,
(4i) un mélange d'une ou plusieurs espèce(s) (i) avec une ou plusieurs espèce(s) (2i),

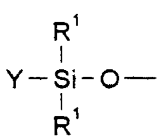
(5)

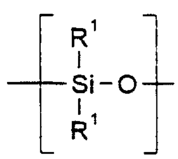
(4)

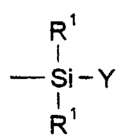
(6)

formules dans lesquelles :

- les symboles $R^1$ sont semblables ou différents et représentent chacun un radical alkyle linéaire ou ramifié en $C_1$ - $C_8$, éventuellement substitué par un ou des halogène(s), comme par exemple méthyle, éthyle, propyle,

octyle, 3,3,3-trifluoropropyle ; un radical cycloalkyle en $C_5$ - $C_8$, comme par exemple cyclohexyle, cycloheptyle; un radical aryle en $C_6$- $C_{12}$ ou aralkyle ayant une partie aryle en $C_6$ - $C_{12}$ et une partie alkyle en $C_1$ - $C_4$, éventuellement substitué sur la partie aromatique par un ou plusieurs halogène(s), alkyle(s) en $C_1$ - $C_3$ et/ou alkoxy en $C_1$ - $C_3$, comme par exemple phényle, xylyle, tolyle, benzyle, phényléthyle, chlorophényle, dichlorophényle ;

- les symboles Y sont semblables ou différents et représentent chacun : soit un radical $R^1$, soit un radical $OR^2$ où $R^2$ est un atome d'hydrogène ou un radical alkyle linéaire ou ramifié en $C_1$ - $C_3$.

Par POS linéaires (i), on entend des POS ne présentant pas plus de 3 % de motifs autres que les motifs de formules (4), (5) et (6), par exemple des motifs de formules $R^1SiO_{3/2}$ (T) et/ou $SiO_2$ (Q), les % indiqués expriment le nombre de motifs T et/ou Q pour 100 atomes de silicium.

De préférence, le composé silicone inhibiteur consiste dans un fluide de type (i), (2i), (3i) ou (4i) ayant une viscosité à 25°C qui est au plus égale à 1000 mPa.s et dont au moins 60 % en nombre des symboles $R^1$ représentent des radicaux méthyles.

Des exemples de composés silicones inhibiteurs qui conviennent bien sont :

- à titre de POS linéaires (i) : les polydiméthylsiloxanes qui sont bloqués à chacune des extrémités de chaîne par un motif triméthylsiloxyle [dans les formules (4), (5) et (6) : $R^1 = Y = CH_3$] ou par un groupe hydroxyle [dans les formules (4), (5) et (6) : $R^1 = CH_3$ et Y = OH] et possèdent une viscosité à 25°C qui est comprise entre 5 et 300 mPa.s ;
- à titre de POS cycliques (2i) : les polydiméthylsiloxanes cycliques présentant de 3 à 9 motifs de formule (4) où $R^1 = CH_3$ ;
- et leurs divers mélanges possibles de type (3i) ou (4i).

Les acides de Lewis qui sont mis en oeuvre comme catalyseurs dans le présent procédé sont de préférence des chlorures et des bromures.

Des exemples de catalyseurs qui conviennent bien sont : $TiCl_4$, $FeCl_3$, CuCl, AgCl, $ZnCl_2$, $AlCl_3$, $SnCl_2$, $BiCl_3$ et leurs divers mélanges. Le catalyseur qui convient tout spécialement bien est $AlCl_3$.

Les catalyseurs sont utilisés dans des proportions pondérales allant en général de 0,1 à 10 % et, de préférence, de 0,5 à 5 % par rapport au poids total des silanes de formules (1) et (2) chargés au départ. Des proportions pondérales qui sont tout spécialement préférées, sont celles allant de 1 à 4 % par rapport à la même référence.

Un autre paramètre important du procédé selon l'invention tient au moment de l'introduction du composé silicone inhibiteur. En tout état de cause, il est préférable que celui-ci soit introduit lorsque la réaction de redistribution est terminée.

Sachant par ailleurs que la réaction de redistribution s'effectue généralement à des températures comprises entre 50°C et 200°C - avantageusement sous pression autogène - et que l'on refroidit ensuite le milieu réactionnel avant distillation, il est possible de prévoir l'introduction du composé inhibiteur :

- soit à la température de redistribution, avant refroidissement,
- soit après retour du milieu réactionnel à cette température de refroidissement,
- soit avant et après ledit refroidissement.

Dans ce contexte, les deux modes préférés de mise en oeuvre du procédé selon l'invention sont donnés ci-après.

Selon un premier mode :

- on effectue la réaction de redistribution à une température comprise entre 50 et 200° C, de préférence entre 80 et 150° C, avantageusement sous pression autogène,
- on refroidit ensuite le milieu réactionnel à une température inférieure à 40° C, de préférence à 30° C et, plus préférentiellement encore, comprise entre 10 et 30° C,
- on introduit alors le composé silicone inhibiteur,
- et l'on sépare enfin, par distillation, l'organohydrogénosilane chloré visé, produit par redistribution.

Selon un deuxième mode de mise en oeuvre :

- on effectue la redistribution à une température comprise entre 50 et 200° C, de préférence entre 80 et 150° C, avantageusement sous pression autogène,
- on introduit le composé silicone inhibiteur, de sorte que l'on interrompt la redistribution,

- on refroidit ensuite le milieu réactionnel à une température inférieure à 40° C, de préférence à 30° C et, plus préférentiellement encore, comprise entre 10 et 30° C,
- et l'on sépare enfin, par distillation, l'organohydrogénosilane chloré visé.

En ce qui concerne les paramètres du procédé (durée, température, pression), on précisera, pour fixer les idées, qu'il est très avantageux que la température de redistribution soit, par exemple, de l'ordre de 90 à 120° C, tandis que la pression idéale s'établit autour de 3 à 5 x $10^5$ Pa. La durée de la réaction de redistribution dépend de la stoechiométrie de la réaction, de même que de la température. A titre d'exemple, il est possible d'indiquer qu'elle sera de l'ordre de 1 à 3 heures.

Il est tout spécialement préférable que le refroidissement du milieu réactionnel après redistribution, corresponde à une température de l'ordre de 15°C.

Avant d'effectuer l'introduction d'inhibiteur, on provoque, au besoin, le retour à la pression atmosphérique du milieu réactionnel, par exemple par dégazage.

L'introduction du composé silicone inhibiteur s'effectue avantageusement de façon lente, par exemple en une ou plusieurs dizaines de minutes, par exemple 20 à 30 minutes. L'incorporation du composé inhibiteur entraîne généralement une légère élévation de température ainsi qu'un dégagement gazeux important et éventuellement la formation d'un précipité blanc.

L'étape qui suit est donc la distillation sous pression atmosphérique de préférence, ce qui conduit à un distillat contenant l'organohydrogénosiloxane chloré de redistribution souhaité et un culot de distillation biphasique ou homogène, selon la quantité de composé silicone inhibiteur mise en oeuvre.

En ce qui concerne les deux types de silanes admis à réagir, c'est-à-dire l'organohydrogénosilane chloré de formule (1) et le silane organo-substitué et éventuellement chloré de formule (2), on fera noter que les symboles R et R' peuvent être choisis, par exemple, parmi les radicaux méthyle, éthyle, propyle, isopropyle, butyle, hexyle, phényle, naphtyle et diphényle.

De préférence les symboles R et R' sont semblables ou différents et représentent chacun un radical alkyle linéaire ou ramifié en $C_1$ - $C_3$ ou un radical phényle.

En tout état de cause, les symboles R et R', qui sont tout spécialement préférés, sont semblables ou différents et représentent chacun un méthyle ou un phényle.

Le procédé selon la présente invention s'applique bien à la mise en oeuvre d'une réaction de redistribution entre l'organohydrogénosilane chloré (1) de formule $RHSiCl_2$ et le silane organo-substitué et chloré (2) de formule $R'_3SiCl$ (dans ce cas a = 1, b = 1 et c = 3), formules dans lesquelles les symboles R et R' ont les significations générales données ci-avant, dans la présentation de l'invention, à propos des formules (1) et (2).

Le procédé selon la présente invention s'applique tout particulièrement bien à la mise en oeuvre d'une réaction de redistribution entre l'organohydrogénosilane chloré (1) de formule $RHSiCl_2$ et le silane organo-substitué et chloré (2) de formule $R'_3SiCl$ (dans ce cas a = 1, b = 1 et c = 3), formules dans lesquelles les symboles R et R' sont semblables ou différents et représentent chacun un radical alkyle linéaire ou ramifié en $C_1$ - $C_3$ ou un radical phényle.

Le procédé selon la présente invention s'applique tout spécialement bien à la mise en oeuvre d'une réaction de redistribution entre l'organohydrogénosilane chloré (1) de formule $RHSiCl_2$ et le silane organo-substitué et chloré (2) de formule $R'_3SiCl$, formules dans lesquelles les symboles R et R' sont semblables ou différents et représentent chacun un radical méthyle ou phényle.

De façon générale, dans la conduite du procédé selon la présente invention, le réactif de type organohydrogénosilane chloré de formule (1) peut être présent dans le milieu de la réaction de redistribution à raison d'au moins 10 % en mole par rapport au mélange : organohydrogénosilane chloré de formule (1) + silane organo-substitué et éventuellement chloré de formule (2).

De préférence, le rapport molaire :

$$\frac{\text{organohydrogénosilane chloré de formule (1)}}{\text{silane organo-substitué de formule (2)}}$$

est compris entre 0, 1 et 2. De manière encore plus préférentielle, ce rapport molaire est compris entre 0,3 et 0,7.

Dans le cadre de la réaction de redistribution, à la mise en oeuvre de laquelle le procédé selon l'invention s'applique tout spécialement bien, faisant intervenir par exemple $MeHSiCl_2$ et $Me_3SiCl$ à titre des silanes (1) et (2) de départ, on récupère in fine un organohydrogénosilane chloré produit par redistribution consistant en $Me_2HSiCl$, et le composé $Me_2SiCl_2$. A noter que ce silane $Me_2SiCl_2$ est essentiellement un produit de la réaction de redistribution, mais il peut aussi provenir, quand elle a lieu, de la réaction parasite de dismutation dont on parle ci-avant où une partie du silane redistribué $Me_2HSiCl$ est convertie en $Me_2SiH_2$ et $Me_2SiCl_2$.

Le procédé selon l'invention permet d'accroître de manière notable les rendements en organohydrogénosilane chloré redistribué (par exemple $Me_2HSiCl$), tout en simplifiant les procédures opératoires de synthèse (redistribution

/ distillation).

Les dispositifs utilisés pour la mise en oeuvre du procédé sont des appareillages classiques de génie chimique, parfaitement à la portée de l'homme du métier.

Les exemples qui suivent, permettront de mieux comprendre toutes les variantes et les avantages (processabilité) du procédé selon l'invention, en mettant en exergue, par des tests comparatifs, les gains de rendement obtenus.

EXEMPLES

A) Composés silicones inhibiteurs mis en oeuvre :

- POS 1 : huile polydiméthylsiloxane linéaire α, ω-dihydroxylée de viscosité à 25°C égale à 50 mPa.s, de formule :

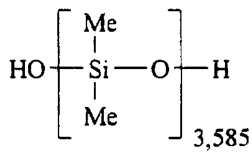

  et ayant les caractéristiques suivantes : masse moléculaire calculée = 283,3 g ; nombre d'atomes d'oxygène pour une mole d'huile = 4,59 ;
- POS 2 : huile polydiméthylsiloxane cyclique contenant 4 motifs diméthylsiloxyles, de viscosité à 25°C égale à 2 mPa.s et ayant les caractéristiques suivantes : masse moléculaire calculée = 296 g ; nombre d'atomes d'oxygène pour une mole d'huile = 4 ;
- POS 3 : huile polydiméthylsiloxane cyclique contenant 5 motifs diméthylsiloxyles, de viscosité à 25°C égale à 2,5 mPa.s et ayant les caractéristiques suivantes : masse moléculaire calculée = 370 g ; nombre d'atome d'oxygène pour une mole d'huile = 5.

B) Mode opératoire ;

I) Essais sans blocage de catalyseur :

Exemple comparatif 1

Dans un réacteur en inox de 2 litres préalablement purgé à l'azote on charge sous agitation 913 g de $Me_3SiCl$ et 483 g $MeHSiCl_2$ pour obtenir un rapport molaire $MeH/Me_3$ égal à 0,5. Le catalyseur, soit 42 g de chlorure d'aluminium anhydre, est ajouté à ce mélange. Le réacteur est fermé et la pression est ajustée à 10 x $10^5$ Pa avec de l'azote, puis à la valeur de la pression atmosphérique. L'agitation est assurée par une turbine de rushton. La vitesse d'agitation est fixée à 1 000 tours/min. On chauffe à 100° C, la pression s'établit à 4,5 x $10^5$ Pa. La température est maintenue à 100° C pendant 2 heures. Le réacteur est refroidi à 20° C et la pression résiduelle de 1,5 à 2 x $10^5$ Pa est éliminée par dégazage. 1387 g du mélange réactionnel contenant 193 g de $Me_2H$ SiCl et 3 % en poids de chlorure d'aluminium sont séparés par distillation sous pression atmosphérique. On obtient un distillat contenant le diméthylhydrogénochlorosilane et un culot de distillation hétérogène avec $AlCl_3$ en suspension. Les distillats et culots sont analysés par chromatographie phase vapeur. $Me_2H$ SiCl dans distillat : 136 g.

II) Essais avec blocage de catalyseur :

Exemple 1

Dans un réacteur en inox de 2 litres préalablement purgé à l'azote on charge sous agitation 915 g de $Me_3SiCl$ et 483 g $MeHSiCl_2$ pour obtenir un rapport molaire $MeH/Me_3$ égal à 0,5.

Le catalyseur, soit 42 g de chlorure d'aluminium anhydre, est ajouté à ce mélange. Le réacteur est fermé et la pression est ajustée à 10 x $10^5$ Pa avec de l'azote, puis à la pression atmosphérique. L'agitation est assurée par une turbine de rushton. La vitesse d'agitation est fixée à 1000 tours/mn. On chauffe à 100° C, la pression s'établit à

4,5 x $10^5$ Pa. La température est maintenue à 100° C pendant 2 heures. Le réacteur est refroidi à 15° C. La pression résiduelle de 1,5 x $10^5$ Pa est éliminée par dégazage. On introduit dans le réacteur 149 g du composé inhibiteur POS 1 en 20 minutes. La température s'élève à 18,5° C. On observe un dégagement gazeux important et la formation d'un précipité blanc. 1557 g de mélange réactionnel contenant 185,7 g de $Me_2H$ SiCl et le catalyseur inactif sont séparés par distillation sous pression atmosphérique. On obtient un distillat contenant le diméthylhydrogénochlorosilane et un culot de distillation biphasique.

Les distillats et culots sont analysés par chromatographie phase vapeur. $Me_2H$ SiCl dans distillat : 185 g

Exemple 2

Dans un réacteur en inox de 2 litres préalablement purgé à l'azote on charge sous agitation 915 g de $Me_3SiCl$ et 483 g $MeHSiCl_2$ pour obtenir un rapport molaire $MeH/Me_3$ égal à 0,5.

Le catalyseur, soit 42 g de chlorure d'aluminium anhydre, est ajouté à ce mélange. Le réacteur est fermé et la pression est ajustée à 10 x $10^5$Pa avec de l'azote, puis à la pression atmosphérique. L'agitation est assurée par une turbine de rushton. La vitesse d'agitation est fixée à 1000 tours/min. On chauffe à 100° C, la pression s'établit à 4,5 x $10^5$Pa. La température est maintenue à 100° C pendant 2 heures. Le réacteur est refroidi à 15° C. La pression résiduelle de 1,5 x $10^5$Pa est éliminée par dégazage. On introduit dans le réacteur 66 g de composé inhibiteur POS 1 en 20 minutes. La température s'élève à 18,5° C. On observe un dégagement gazeux important et la formation d'un précipité blanc. 1476 g de mélange réactionnel contenant 199,6 g de $Me_2H$ SiCl et le catalyseur inactif sont séparés par distillation sous pression atmosphérique. On obtient un distillat contenant le diméthylhydrogénochlorosilane et un culot de distillation biphasique.
Les distillats et culots sont analysés par chromatographie phase vapeur. $Me_2H$ SiCl dans distillat : 199 g

Exemple 3

Dans un réacteur en inox de 2 litres préalablement purgé à l'azote on charge sous agitation 915 g de $Me_3SiCl$ et 483 g $MeHSiCl_2$ pour obtenir un rapport molaire $MeH/Me_3$ égal à 0,5.

Le catalyseur, soit 42 g de chlorure d'aluminium anhydre, est ajouté à ce mélange. Le réacteur est fermé et la pression est ajustée à 10 x $10^5$ Pa avec de l'azote, puis à la pression atmosphérique. L'agitation est assurée par une turbine de rushton. La vitesse d'agitation est fixée à 1000 tours/min. On chauffe à 100° C, la pression s'établit à 4,5 x $10^5$Pa. La température est maintenue à 100° C pendant 2 heures. On introduit dans le réacteur 58,5 g de composé inhibiteur POS 3 en 10 minutes. On ne note pas d'augmentation de la pression. Le réacteur est ensuite refroidi à 20° C. La pression résiduelle de 1,5 à 2 x $10^5$Pa est éliminée par dégazage. 1462 g de mélange réactionnel contenant 196,8 g de $Me_2H$ SiCl et le catalyseur inactif sont séparés par distillation sous pression atmosphérique. On obtient un distillat contenant le diméthylhydrogénochlorosilane et un culot de distillation biphasique.

Les distillats et culots sont analysés par chromatographie phase vapeur. $Me_2H$ SiCl dans distillat : 196,4 g.

Exemples 4

Dans un réacteur en inox de 2 litres préalablement purgé à l'azote on charge sous agitation 915 g de $Me_3SiCl$ et 483 g $MeHSiCl_2$ pour obtenir un rapport molaire $MeH/Me_3$ égal à 0,5.

Le catalyseur, soit 42 g de chlorure d'aluminium anhydre, est ajouté à ce mélange. Le réacteur est fermé et la pression est ajustée à 10 x $10^5$Pa avec de l'azote, puis à la pression atmosphérique. L'agitation est assurée par une turbine de rushton. La vitesse d'agitation est fixée à 1000 tours/min. On chauffe à 100° C, la pression s'établit à 4,5 x $10^5$Pa. La température est maintenue à 100° C pendant 2 heures. Le réacteur est refroidi à 20° C. La pression résiduelle de 1,5 à 2 x $10^5$Pa est éliminée par dégazage. On introduit dans le réacteur en 10 minutes 46,2 g de composé inhibiteur POS 2. On observe une faible exothermie sans dégagement gazeux. 1416 g de mélange réactionnel contenant 206 g de $Me_2H$ SiCl et le catalyseur inactif sont séparés par distillation sous pression atmosphérique. On obtient un distillat contenant le diméthylhydrogénochlorosilane et un culot de distillation biphasique.

Les distillats et culots sont analysés par chromatographie phase vapeur. $Me_2HSiCl$ dans distillat : 200 g.

Exemple 5

Dans un réacteur en inox de 2 litres préalablement purgé à l'azote on charge sous agitation 915 g de $Me_3SiCl$ et 483 g $MeHSiCl_2$ pour obtenir un rapport molaire $MeH/Me_3$ égal à 0,5.

Le catalyseur, soit 42 g de chlorure d'aluminium anhydre, est ajouté à ce mélange. Le réacteur est fermé et la pression est ajustée à 10 x $10^5$Pa avec de l'azote, puis à la pression atmosphérique. L'agitation est assurée par une turbine de rushton. La vitesse d'agitation est fixée à 1000 tours/min. On chauffe à 100° C, la pression s'établit à 5 x

$10^5$Pa. La température est maintenue à 100° C pendant 2 heures. On introduit dans le réacteur 45 g de composé inhibiteur POS 3 en 10 minutes. Le réacteur est ensuite refroidi à 20° C. La pression résiduelle de 1,5 à 2 x $10^5$Pa est éliminée par dégazage. 1424 g de mélange réactionnel contenant 194,3 g de $Me_2H$ SiCl et le catalyseur inactif sont séparés par distillation sous pression atmosphérique. On obtient un distillat contenant le diméthylhydrogénochlorosilane et un culot de distillation biphasique.

Les distillats et culots sont analysés par chromatographie phase vapeur. $Me_2H$ SiCl dans distillat :190,4 g.

Exemple 6

Dans un réacteur en inox de 2 litres préalablement purgé à l'azote on charge sous agitation 915 g de $Me_3SiCl$ et 491 g $MeHSiCl_2$ pour obtenir un rapport molaire $MeH/Me_3$ égal à 0,5.

Le catalyseur, soit 42 g de chlorure d'aluminium anhydre, est ajouté à ce mélange. Le réacteur est fermé et la pression est ajustée à 10 x $10^5$Pa avec de l'azote, puis à la pression atmosphérique. L'agitation est assurée par une turbine de rushton. La vitesse d'agitation est fixée à 1000 tours/min. On chauffe à 100° C, la pression s'établit à 5 x $10^5$Pa. La température est maintenue à 100° C pendant 2 heures. On introduit dans le réacteur 36 g de composé inhibiteur POS 3 en 10 minutes. Le réacteur est ensuite refroidi à 20° C. La pression résiduelle de 1,5 à 2 x $10^5$Pa est éliminée par dégazage. 543,8 g de mélange réactionnel contenant 71 g de $Me_2H$ SiCl et le catalyseur inactif sont séparés par distillation sous pression atmosphérique. On obtient un distillat contenant le diméthylhydrogénochlorosilane et un culot de distillation homogène.

Les distillats et culots sont analysés par chromatographie phase vapeur. $Me_2H$ SiCl dans distillat :69,3 g.

Exemple comparatif 2

Dans un réacteur en inox de 2 litres préalablement purgé à l'azote on charge sous agitation 909 g de $Me_3SiCl$ et 476 g $MeHSiCl_2$ pour obtenir un rapport molaire $MeH/Me_3$ égal à 0,5.

Le catalyseur, soit 42 g de chlorure d'aluminium anhydre, est ajouté à ce mélange. Le réacteur est fermé et la pression est ajustée à 10 x $10^5$Pa avec de l'azote, puis à la pression atmosphérique. L'agitation est assurée par une turbine de rushton. La vitesse d'agitation est fixée à 1000 tours/min. On chauffe à 100° C, la pression s'établit à 5 x $10^5$Pa. La température est maintenue à 100° C pendant 2 heures. On introduit dans le réacteur 23,7 g de composé inhibiteur POS 3 en 10 minutes. Le réacteur est ensuite refroidi à 20° C. La pression résiduelle de 1,5 à 2 x $10^5$Pa est éliminée par dégazage. 518 g de mélange réactionnel contenant 73,5 g de $Me_2H$ SiCl et le catalyseur inactif sont séparés par distillation sous pression atmosphérique. On obtient un distillat contenant le diméthylhydrogénochlorosilane et un culot de distillation biphasique.

Les distillats et culots sont analysés par chromatographie phase vapeur. $Me_2H$ SiCl dans distillat :41,2 g.

Le tableau I qui suit récapitule les résultats obtenus. Le RR représente le rendement de la distillation.

Tableau 1

| Exemples | CATALYSEUR $AlCl_3$ | | INHIBITEUR | | | | $Me_2HSiCl$ | ASPECT CULOT |
|---|---|---|---|---|---|---|---|---|
| | Poids (g) | Mole d'atome d'Al | Nature inhibiteur | Poids (g) | Mole d'atome d'oxygène | Rapport molaire **r** | (RR %) | H = homogène B = biphasique |
| Ex. Comparatif 1 | 42 | 0,315 | néant | | | | 70,4 | B |
| Exemple 1 | 42 | 0,315 | POS 1 | 149 | 2,414 | 0,13 | 99,6 | B |
| Exemple 2 | 42 | 0,315 | POS 1 | 66 | 1,069 | 0,29 | 99,7 | B |
| Exemple 3 | 42 | 0,315 | POS 3 | 58,5 | 0,791 | 0,39 | 99,8 | B |
| Exemple 4 | 42 | 0,315 | POS 2 | 46,2 | 0,624 | 0,50 | 97,1 | B |
| Exemple 5 | 42 | 0,315 | POS 3 | 45 | 0,608 | 0,52 | 97,9 | B |
| Exemple 6 | 42 | 0,315 | POS 3 | 36 | 0,486 | 0,65 | 97,6 | H |
| Ex. comparatif 2 | 42 | 0,315 | POS 3 | 23,7 | 0,320 | 0,98 | 56,1 | B |

## Revendications

**1.** Procédé amélioré d'obtention d'organosilanes comprenant :

- une réaction de redistribution entre un organohydrogénosilane chloré de formule (1) $(R)_a (H)_b SiCl_{4-a-b}$ et un silane organo-substitué et éventuellement chloré de formule (2) $(R')_cSiCl_{4-c}$, formules dans lesquelles : a = 1 ou 2 ; b = 1 ou 2 ; a + b = 3 ; c = 1, 2, 3 ou 4 ; les symboles R et R' sont semblables ou différents et représentent chacun un radical alkyle linéaire ou ramifié en $C_1$ - $C_6$ ou un radical aryle en $C_6$ - $C_{12}$ ; ladite réaction de redistribution se déroulant en présence d'une quantité efficace d'un catalyseur consistant dans un acide de Lewis de formule (3) $M(X)_d$ dans laquelle : M représente un métal sélectionné parmi Ti, Fe, Cu, Ag, Zn, Cd, Hg, Al, Ga, In, B, Sn, Pb, Sb et Bi ; X représente un atome d'halogène ; d représente la valence du métal M ;
- et une séparation par distillation de l'organohydrogénosilane chloré produit par redistribution ;

ledit procédé étant **caractérisé en ce que** l'on fait intervenir, après la redistribution, au moins un composé inhibiteur du catalyseur de redistribution répondant aux définitions suivantes :

- il est choisi parmi les polyorganosiloxanes (en abréviation POS) fluides ayant une viscosité à 25°C au plus égale à 5 000 mPa.s ;
- il est utilisé dans des proportions telles que le rapport :

$$r = \frac{\text{nombre de moles d'atome de métal M apportées par le catalyseur}}{\text{nombre de moles d'atome d'oxygène apportées par l'inhibiteur}}$$

est égal ou inférieur à 0,9.

**2.** Procédé selon la revendication 1, **caractérisé en ce que** le composé silicone inhibiteur est utilisé dans des proportions telles que le rapport r est situé dans l'intervalle allant de 0,6 à 0,9.

**3.** Procédé selon la revendication 1 ou 2, **caractérisé en ce que** le composé silicone inhibiteur peut être :

(i) un POS linéaire ou sensiblement linéaire et constitué de motifs de formule (4), terminé à l'une des extrémités des chaînes par un motif de formule (5) et à l'autre extrémité par un motif de formule (6),
(2i) un POS cyclique et constitué par des motifs de formule (4),
(3i) un mélange de plusieurs espèces (i) ou (2i) entre elles,
(4i) un mélange d'une ou plusieurs espèce(s) (i) avec une ou plusieurs espèce(s) (2i),

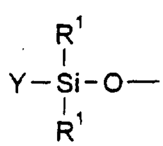
(5)

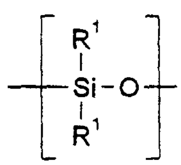
(4)

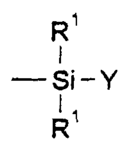
(6)

formules dans lesquelles :

- les symboles $R^1$ sont semblables ou différents et représentent chacun un radical alkyle linéaire ou ramifié en $C_1$ - $C_8$, éventuellement substitué par un ou des halogène(s) ; un radical cycloalkyle en $C_5$ - $C_8$; un radical aryle en $C_6$- $C_{12}$ ou aralkyle ayant une partie aryle en $C_6$ - $C_{12}$ et une partie alkyle en $C_1$ - $C_4$, éventuellement substitué sur la partie aromatique par un ou plusieurs halogène(s), alkyle(s) en $C_1$ - $C_3$ et/ou alkoxy en $C_1$ - $C_3$,
- les symboles Y sont semblables ou différents et représentent chacun : soit un radical $R^1$, soit un radical $OR^2$ où $R^2$ est un atome d'hydrogène ou un radical alkyle linéaire ou ramifié en $C_1$ - $C_3$.

**4.** Procédé selon la revendication 3, **caractérisé en ce que** le composé silicone inhibiteur consiste dans un fluide de type (i), (2i), (3i) ou (4i) ayant une viscosité à 25°C qui est au plus égale à 1000 mPa.s et dont au moins 60 % en nombre des symboles $R^1$ représentent des radicaux méthyles.

**5.** Procédé selon l'une quelconque des revendications 1 à 4, **caractérisé en ce que** les acides de Lewis qui sont mis en oeuvre comme catalyseurs sont des chlorures et des bromures.

**6.** Procédé selon la revendication 5, **caractérisé en ce que** le catalyseur est pris dans le groupe formé par $TiCl_4$, $FeCl_3$, CuCl, AgCl, $ZnCl_2$, $AlCl_3$, $SnCl_2$, $BiCl_3$ et leurs divers mélanges.

**7.** Procédé selon l'une quelconque des revendications 1 à 6, **caractérisé en ce que** le catalyseur est utilisé dans des proportions pondérales allant de 0,1 à 10 % par rapport au poids total des silanes de formules (1) et (2) chargés au départ.

**8.** Procédé selon l'une quelconque des revendications 1 à 7, **caractérisé en ce que** :

- on effectue la réaction de redistribution à une température comprise entre 50 et 200° C, avantageusement sous pression autogène,
- on refroidit ensuite le milieu réactionnel à une température inférieure à 40° C,
- on introduit alors le composé silicone inhibiteur,
- et l'on sépare enfin, par distillation, l'organohydrogénosilane chloré visé, produit par redistribution.

**9.** Procédé selon l'une quelconque des revendications 1 à 7, **caractérisé en ce que** :

- on effectue la redistribution à une température comprise entre 50 et 200° C, avantageusement sous pression autogène,
- on introduit le composé silicone inhibiteur, de sorte que l'on interrompt la redistribution,
- on refroidit ensuite le milieu réactionnel à une température inférieure à 40° C,
- et l'on sépare enfin, par distillation, l'organohydrogénosilane chloré visé.

**10.** Procédé selon l'une quelconque des revendications 1 à 9, **caractérisé en ce que**, s'agissant des deux types de silanes admis à réagir, c'est-à-dire l'organohydrogénosilane chloré de formule (1) et le silane organo-substitué et éventuellement chloré de formule (2), les symboles R et R' sont semblables ou différents et représentent chacun un radical alkyle linéaire ou ramifié en $C_1$ - $C_3$ ou un radical phényle.

**11.** Procédé selon l'une quelconque des revendications 1 à 10, **caractérisé en ce que** l'on réalise une réaction de redistribution entre l'organohydrogénosilane chloré (1) de formule $RHSiCl_2$ et le silane organo-substitué et chloré (2) de formule $R'_3SiCl$ (dans ce cas a = 1, b = 1 et c = 3)

## Patentansprüche

**1.** Verbessertes Verfahren zur Herstellung von Organosilanen, umfassend:

eine Redistributions-Reaktion zwischen einem chlorierten Organohydrogensilan der Formel (1) $(R)_a(H)_bSiCl_{4-a-b}$ und einem organo-substituierten und gegebenenfalls chlorierten Silan der Formel (2) $(R')_cSiCl_{4-c}$, wobei in den Formeln a = 1 oder 2; b = 1 oder 2; a + b = 3; c = 1, 2, 3 oder 4 sind; die Symbole R und R' gleich oder verschieden sind und jeweils einen linearen oder verzweigten Rest Alkyl mit 1 bis 6 Kohlenstoffatomen oder einen Rest Aryl mit 6 bis 12 Kohlenstoffatomen darstellen, wobei die genannte Redistributions-Reaktion in Anwesenheit einer wirksamen Menge eines Katalysators abläuft, bestehend aus einer Lewis-Säure der Formel (3) $M(X)_d$, in der M ein Metall darstellt, ausgewählt unter Ti, Fe, Cu, Ag, Zn, Cd, Hg, Al, Ga, In, B, Sn, Pb, Sb und Bi; X ein Halogenatom bedeutet; d die Valenz des Metalls M darstellt; und
eine Abtrennung des durch die Redistribution erzeugten chlorierten Organohydrogensilanes durch Destillation;

wobei das genannte Verfahren **dadurch gekennzeichnet ist, daß** man nach der Redistribution mindestens eine Inhibitorverbindung des Katalysators der Redistribution einsetzt, die den folgenden Definitionen entspricht:

- sie wird ausgewählt unter den flüssigen Polyorganosiloxanen (abgekürzt POS) mit einer Viskosität bei 25 °C von höchstens gleich 5000 mPa.s;
- sie wird in solchen Proportionen verwendet, daß das Verhältnis:

$$r = \frac{\text{Anzahl der Mole Metallatom M, eingebracht durch den Katalysator}}{\text{Anzahl der Mole Sauerstoffatom, eingebracht durch den Inhibitor}}$$

gleich oder weniger als 0,9 beträgt.

2. Verfahren nach Anspruch 1, **dadurch gekennzeichnet, daß** die Silicon-Inhibitorverbindung in solchen Proportionen verwendet wird, daß sich das Verhältnis r im Intervall von 0,6 bis 0,9 befindet.

3. Verfahren nach Anspruch 1 oder 2, **dadurch gekennzeichnet, daß** die Silicon-Inhibitorverbindung sein kann:

(i) ein lineares oder in etwa lineares POS und bestehend aus Struktureinheiten (4), terminiert an einem der Enden der Ketten durch eine Struktureinheit der Formel (5) und am anderen Ende durch eine Struktureinheit der Formel (6),
(2i) ein cyclisches POS und bestehend aus Struktureinheiten der Formel (4),
(3i) eine Mischung von mehreren Arten (i) oder (2i) untereinander,
(4i) eine Mischung von einer oder mehreren Art(en) (i) mit einer oder mehreren Art(en) (2i),

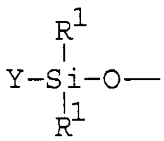
(5)

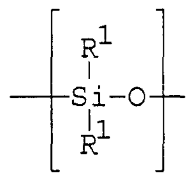
(4)

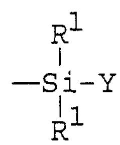
(6)

wobei in den Formeln:

. die Symbole $R^1$ gleich oder verschieden sind und jeweils einen linearen oder verzweigten Rest Alkyl mit 1 bis 8 Kohlenstoffatomen, gegebenenfalls substituiert durch ein oder mehrere Halogene; einen Rest Cycloalkyl mit 5 bis 8 Kohlenstoffatomen; einen Rest Aryl mit 6 bis 12 Kohlenstoffatomen oder Aralkyl mit einem Arylteil mit 6 bis 12 Kohlenstoffatomen und einem Alkylteil mit 1 bis 4 Kohlenstoffatomen darstellen, gegebenenfalls substituiert an dem aromatischen Teil durch ein oder mehrere Halogen(e), Alkyl(e) mit 1 bis 3 Kohlenstoffatomen und/oder Alkoxy mit 1 bis 3 Kohlenstoffatomen, die Symbole Y gleich oder verschieden sind und jeweils entweder einen Rest $R^1$ oder einen Rest $OR^2$ bedeuten, worin $R^2$ ein Wasserstoffatom oder ein linearer oder verzweigter Rest Alkyl mit 1 bis 3 Kohlenstoffatomen ist.

4. Verfahren nach Anspruch 3, **dadurch gekennzeichnet, daß** die Silicon-Inhibitorverbindung aus einem Fluid vom Typ (i), (2i), (3i) oder (4i) besteht, das eine Viskosität bei 25 °C aufweist, die höchstens gleich 1000 mPa.s beträgt und bei der zahlenmäßig mindestens 60 % der Symbole $R^1$ Reste Methyl sind.

5. Verfahren nach irgendeinem der Ansprüche 1 bis 4, **dadurch gekennzeichnet, daß** die als Katalysator eingesetzten Lewis-Säuren Chloride und Bromide sind.

6. Verfahren nach Anspruch 5, **dadurch gekennzeichnet, daß** der Katalysator aus der Gruppe genommen wird, die durch $TiCl_4$, $FeCl_3$, CuCl, AgCl, $ZnCl_2$, $AlCl_3$, $SnCl_2$, $BiCl_3$ und ihre verschiedenen Mischungen gebildet wird.

7. Verfahren nach irgendeinem der Ansprüche 1 bis 6, **dadurch gekennzeichnet, daß** der Katalysator in Gewichtsverhältnissen verwendet wird, die von 0,1 bis 10 % reichen, bezogen auf das Gesamtgewicht der als Ausgangsstoffe eingesetzten Silane der Formeln (1) und (2).

8. Verfahren nach irgendeinem der Ansprüche 1 bis 7, **dadurch gekennzeichnet, daß** man

- die Redistributions-Reaktion bei einer Temperatur zwischen 50 °C und 200 °C und vorteilhafterweise unter autogenem Druck durchführt,
- anschließend das Reaktionsmedium auf eine Temperatur von unter 40 °C abkühlt,
- danach die Silicon-Inhibitorverbindung einträgt, und schließlich

- das durch Redistribution erzeugte, angestrebte chlorierte Organohydrogensilan durch Destillation abtrennt.

**9.** Verfahren nach irgendeinem der Ansprüche 1 bis 7, **dadurch gekennzeichnet, daß** man

- die Redistribution bei einer Temperatur zwischen 50 °C und 200 °C und vorteilhafterweise unter autogenem Druck durchführt,
- die Silicon-Inhibitorverbindung einträgt, so daß die Redistribution unterbrochen wird,
- anschließend das Reaktionsmedium auf eine Temperatur von unter 40 °C abkühlt, und schließlich
- das angestrebte chlorierte Organohydrogensilan durch Destillation abtrennt.

**10.** Verfahren nach irgendeinem der Ansprüche 1 bis 9, **dadurch gekennzeichnet, daß** es sich um zwei Typen von eingesetzten, zu reagierenden Silanen handelt, das heißt, um chloriertes Organohydrogensilan der Formel (1) und um organo-substituiertes und gegebenenfalls chloriertes Silan der Formel (2), worin die Symbole R und R' gleich oder verschieden sind und jeweils einen linearen oder verzweigten Rest Alkyl mit 1 bis 3 Kohlenstoffatomen oder einen Rest Phenyl darstellen.

**11.** Verfahren nach irgendeinem der Ansprüche 1 bis 10, **dadurch gekennzeichnet, daß** man eine Redistributions-Reaktion zwischen chloriertem Organohydrogensilan (1) der Formel $RHSiCl_2$ und organo-substituiertem und chloriertem Silan (2) der Formel $R'_3SiCl$ (in diesem Fall a = 1, b = 1 und c = 3) realisiert.

## Claims

**1.** Improved method for obtaining organosilanes comprising:

- a redistribution reaction between a chlorinated organohydrosilane of formula (1) $(R)_a(H)_bSiCl_{4-a-b}$ and an organosubstituted and optionally chlorinated silane of formula (2) $(R')_cSiCl_{4-c}$, in which formulae: a = 1 or 2; b = 1 or 2; a + b = 3; c = 1, 2, 3 or 4; and the symbols R and R' are alike or different and each represent a linear or branched $C_1$-$C_6$ alkyl radical or a $C_6$-$C_{12}$ aryl radical; the said redistribution reaction taking place in the presence of an effective amount of a catalyst consisting of a Lewis acid of formula (3) M(X)d, in which: M represents a metal selected from Ti, Fe, Cu, Ag, Zn, Cd, Hg, Al, Ga, In, B, Sn, Pb, Sb and Bi; X represents a halogen atom; and d represents the valency of the metal M;
- and a separation by distillation of the chlorinated organohydrosilane produced by redistribution;

the said method being **characterized in that**, after the redistribution, at least one compound which inhibits the redistribution catalyst is introduced, this compound corresponding to the following definitions:

- it is chosen from fluid polyorganosiloxanes (abbreviated to POS) having a viscosity at 25°C at most equal to 5000 mPa·s;
- it is used in proportions such that the ratio:

$$r = \frac{\text{number of moles of M metal atoms contributed by the catalyst}}{\text{number of moles of oxygen atoms contributed by the inhibitor}}$$

is equal to or less than 0.9.

**2.** Method according to Claim 1, **characterized in that** the inhibitor silicone compound is used in proportions such that the ratio r is situated within the range from 0.6 to 0.9.

**3.** Method according to Claim 1 or 2, **characterized in that** the inhibitor silicone compound can be:

(i) a linear or substantially linear POS composed of units of formula (4), terminated at one of the ends of the chains by a unit of formula (5) and at the other end by a unit of formula (6),
(2i) a cyclic POS composed of units of formula (4),
(3i) a mixture of several species (i) or (2i) with one another,
(4i) a mixture of one or more species (i) with one or more species (2i),

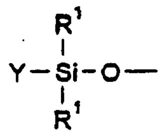

(5)

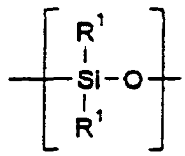

(4)

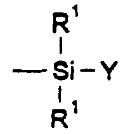

(6)

in which formulae:

- the $R^1$ symbols are alike or different and each represent a linear or branched $C_1$-$C_8$ alkyl radical optionally substituted by one or more halogen(s); a $C_5$-$C_8$ cycloalkyl radical; or a $C_6$-$C_{12}$ aryl radical or an aralkyl radical having a $C_6$-$C_{12}$ aryl part and a $C_1$-$C_4$ alkyl part, optionally substituted on the aromatic part by one or more halogen(s), $C_1$-$C_3$ alkyl(s) and/or $C_1$-$C_3$ alkoxy;
- the Y symbols are alike or different and each represent: either an $R^1$ radical or an $OR^2$ radical, where $R^2$ is a hydrogen atom or a linear or branched $C_1$-$C_3$ alkyl radical.

**4.** Method according to Claim 3, **characterized in that** the inhibitor silicone compound consists of a fluid of type (i), (2i), (3i) or (4i) having a viscosity at 25°C which is at most equal to 1000 mPa·s and at least 60% by number of the $R^1$ symbols of which represent methyl radicals.

**5.** Method according to any one of Claims 1 to 4, **characterized in that** the Lewis acids which are employed as catalysts are chlorides and bromides.

**6.** Method according to Claim 5, **characterized in that** the catalyst is taken from the group formed by $TiCl_4$, $FeCl_3$, CuCl, AgCl, $ZnCl_2$, $AlCl_3$, $SnCl_2$, $BiCl_3$ and their various mixtures.

**7.** Method according to any one of Claims 1 to 6, **characterized in that** the catalyst is used in proportions by weight ranging from 0.1 to 10% by weight with respect to the total weight of the silanes of formulae (1) and (2) charged at the start.

**8.** Method according to any one of Claims 1 to 7, **characterized in that**:

- the redistribution reaction is carried out at a temperature of between 50 and 200°C, advantageously under autogenous pressure,
- the reaction mixture is subsequently cooled to a temperature of less than 40°C,
- the inhibitor silicone compound is then introduced,
- and, finally, the targeted chlorinated organohydrosilane, produced by redistribution, is separated by distillation.

**9.** Method according to any one of Claims 1 to 7, **characterized in that**:

- the redistribution is carried out at a temperature of between 50 and 200°C, advantageously under autogenous pressure,
- the inhibitor silicone compound is introduced, so that the redistribution is interrupted,
- the reaction mixture is subsequently cooled to a temperature of less than 40°C,
- and, finally, the targeted chlorinated organohydrosilane is separated by distillation.

**10.** Method according to any one of Claims 1 to 9, **characterized in that**, concerning the two types of silanes allowed to react, that is to say the chlorinated organohydrosilane of formula (1) and the organosubstituted and optionally chlorinated silane of formula (2), the R and R' symbols are alike or different and each represent a linear or branched $C_1$-$C_3$ alkyl radical or a phenyl radical.

**11.** Method according to any one of Claims 1 to 10, **characterized in that** a redistribution reaction is carried out between the chlorinated organohydrosilane (1) of formula $RHSiCl_2$ and the organosubstituted and chlorinated silane (2) of formula $R'_3SiCl$ (in this case, a = 1, b = 1 and c = 3).